# EUROPEAN PATENT APPLICATION

(11) **EP 4 514 016 A1**
(43) Date of publication of application: **26.02.2025**
(21) Application number: 23791710.9
(22) Date of filing: 07.04.2023
(51) Int. Cl.: H04W 72/0453, H04W 16/14, H04W 48/10, H04W 92/18

(54) **COMMUNICATION DEVICE, AND COMMUNICATION METHOD**

(30) Priority: 20.04.2022 JP 2022069210
(71) Applicant: Panasonic Intellectual Property Corporation of America, Torrance, CA 90504 (US)
(72) Inventor: HORIUCHI, Ayako, Kadoma-shi, Osaka 571-0057 (JP)
(74) Representative: Grünecker Patent- und Rechtsanwälte PartG mbB
(86) International application number: PCT/JP2023/014434
(87) International publication number: WO 2023/204061

(57) **Abstract**

This communication device comprises: a control circuit for disposing a signal for sidelink communication in a frequency resource that satisfies a bandwidth limit regarding the frequency range in an unlicensed band; and a transmission circuit for transmitting the signal.

## Description

### Technical Field

The present disclosure relates to a communication apparatus and a communication method.

### Background Art

Enhancement of a communication system called the 5th Generation mobile communication system (5G) has been studied. The 3rd Generation Partnership Project (3GPP), which is an international standards-developing organization, has been studying development of a communication system in terms of both the development of the Long Term Evolution (LTE) system and New Radio (NR). For example, with enhanced communication capacity, the utilization of an unlicensed band in addition to a licensed band has been studied in the 3GPP.

### Citation List

### Non-Patent Literature

NPL 1
   3GPP, TR 38.885 V16.0.0, "Study on NR Vehicle-to-Everything (V2X)"
NPL 2
   RP-201385, "WID revision: NR sidelink enhancement," LG Electronics, June 29 - July 3, 2020
NPL 3
   RP-213678, "New WID on NR sidelink evolution," OPPO, LG Electronics, Dec. 6 - 17, 2021
NPL 4
   3GPP, TS 37.213 V17.1.0, "Physical layer procedures for shared spectrum channel access,"

### Summary of Invention

In an unlicensed band, however, there is room for consideration regarding resource allocation in the frequency direction.

A non-limiting embodiment of the present disclosure facilitates providing a communication apparatus and a communication method each capable of appropriately performing resource mapping in a frequency direction in an unlicensed band.

A communication apparatus according to an exemplary embodiment of the present disclosure includes: control circuitry, which, in operation, maps a signal for sidelink communication in a frequency resource that satisfies a bandwidth limitation related to a frequency band in an unlicensed band; and transmission circuitry, which, in operation, transmits the signal.

It should be noted that general or specific embodiments may be implemented as a system, a method, an integrated circuit, a computer program, a storage medium, or any selective combination thereof.

According to an embodiment of the present disclosure, it is possible to appropriately perform resource mapping in the frequency direction in an unlicensed band.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates exemplary mapping of PSCCH, PSSCH, and PSFCH in a slot;
FIG. 2 illustrates an example of the regulations regarding the frequency of a signal in an unlicensed band;
FIG. 3 illustrates an example of interlace allocation;
FIG. 4A is a block diagram illustrating an exemplary configuration of a part of a base station;
FIG. 4B is a block diagram illustrating an exemplary configuration of a part of a terminal;
FIG. 5 illustrates an exemplary mapping of S-SS/PSBCH block in Operation Example 1-1 of Embodiment 1;
FIG. 6 illustrates an exemplary mapping of S-SS/PSBCH block in Operation Example 1-2 of Embodiment 1;
FIG. 7 illustrates an exemplary mapping of S-SS/PSBCH block in Operation Example 1-3 of Embodiment 1;
FIG. 8 is a block diagram illustrating a configuration of a terminal according to Embodiment 1;
FIG. 9 illustrates an example of a Subchannel in Operation Example 2-1 of Embodiment 2;
FIG. 10 illustrates an example of a Subchannel in Operation Example 2-2 of Embodiment 2;
FIG. 11 illustrates a first example of the allocation in Operation Example 2-3 of Embodiment 2;
FIG. 12 illustrates a second example of the allocation in Operation Example 2-3 of Embodiment 2;
FIG. 13 is a block diagram illustrating a configuration of a terminal according to Embodiment 2;
FIG. 14 illustrates an example of a mapping in Operation Example 3-1 of Embodiment 3;
FIG. 15 illustrates an example of the allocation in Operation Example 3-2 of Embodiment 3;
FIG. 16 illustrates an exemplary architecture for a 3GPP NR system;
FIG. 17 is a schematic diagram illustrating the functional split between NG-RAN and 5GC;
FIG. 18 is a sequence diagram of a radio resource control (RRC) connection setup/reconfiguration procedure;
FIG. 19 is a schematic diagram illustrating usage scenarios of enhanced mobile broadband (eMBB), massive machine type communications (mMTC), and ultra reliable and low latency communications (URLLC); and
FIG. 20 is a block diagram illustrating an exemplary 5G system architecture for a non-roaming scenario.

### Description of Embodiments

Hereinafter, embodiments of the present disclosure will be described in detail with reference to the drawings.

### [Vehicle to X (V2X)]

Enhancement of a communication system called the 5th Generation mobile communication system (5G) has been studied. In 5G, it has been discussed to flexibly provide functions for each of use cases that require an increase in communication traffic, an increase in the number of terminals to be connected, high reliability, and low latency.

In the 3rd Generation Partnership Project (3GPP), which is an international standards-developing organization, has been studying development of a communication systems in terms of both the development of the Long Term Evolution (LTE) system and New Radio (NR). In 3GPP, it has been first considered to support vehicle to X (V2X) in the LTE system. It is also considered to support V2X in NR in which a band broader than in LTE is available (see, for example, NPL 1).

In addition, not only V2X, but also further enhancement of communication using sidelink have been studied (see, for example, NPL 2). V2X assumes Vehicle to Vehicle (V2V), Vehicle to Infrastructure (V2I), Vehicle to Pedestrian (V2P), and Vehicle to Network (V2N) communication.

In the V2V, V2I, and V2P, terminals can directly transmit and receive signals to and from each other using a link called sidelink (SL) or PC5 without through a network with a base station (for example, a network through a base station). V2N assumes communication through a link called Uu between a base station and a terminal. Note that, the base station may be referred to as gNB in NR or as eNB in LTE.

Further, utilization of sidelink communication in an unlicensed band has also been studied (see, for example, NPL 3).

### [NR Sidelink]

In NR sidelink, unicast, groupcast, and broadcast are supported in transmission and reception. In unicast, one-to-one transmission from a transmission terminal (for example, referred to as Tx UE) to a reception terminal (for example, referred to as Rx UE) is assumed. In groupcast, transmission from a transmission terminal to one or more reception terminals included in a certain group is assumed. In broadcast, transmission from a transmission terminal without identifying a reception terminal is assumed.

In NR sidelink, a control signal called sidelink control information (SCI) is transmitted and received. The SCI may also be referred to as control information. The SCI is divided into the 1st-stage SCI and the 2nd-stage SCI. The 1st-stage SCI is mapped to the physical SL control channel (PSCCH). The 2nd-stage SCI is mapped to at least a part of the physical SL shared channel (PSSCH) through which data is transmitted and received. By dividing the SCI into two, the number of bits and the size of the 1st-stage SCI can be reduced. In the sidelink, there is a function in which a particular terminal (for example, terminal A) receives a PSCCH transmitted from another terminal different from terminal A, and after grasping the usage situation of the resource of the other terminal, determines the resource to be used for transmission by terminal A. This function is also called sensing.

Note that, in the sidelink, signals are transmitted and received through the following channels.
- Physical SL control channel (PSCCH): 1st-stage SCI (sidelink control information) is mapped to a PSCCH.
- Physical SL shared channel (PSSCH): a data signal and 2nd-stage SCI are mapped to a PSSCH.
- Physical SL feedback channel (PSFCH): a feedback signal for a PSSCH is mapped to a PSFCH. The feedback signal indicates, for example, an acknowledgement (ACK) indicating that reception of the PSSCH is successful, or a negative acknowledgement (NACK) indicating that the reception of the PSSCH is not successful. The feedback signal is applicable in a case where a PSSCH is transmitted by unicast or groupcast. Further, in Release 17 (Rel. 17) and thereafter, as Inter-UE coordination, a PSFCH may be transmitted in a case where a collision is detected.
- Physical SL broadcast channel (PSBCH): a broadcast signal is mapped to a PSBCH. The PSBCH is transmitted together with a signal for synchronization. The signal for synchronization is, for example, a sidelink Primary synchronization signal (S-PSS) and/or a sidelink Secondary synchronization signal (S-SSS). The PSBCH to be transmitted together with a signal for synchronization is also referred to as a sidelink synchronization signal block (S-SSB).

Note that, the signal to be transmitted or received in the sidelink may be referred to as a sidelink signal. Further, for example, "transmission of information (or a signal) mapped to a PSCCH" may be abbreviated to "PSCCH transmission". Further, in the following description, the PSCCH may refer to a resource defined as a PSCCH or information (or a signal) mapped to a resource defined as a PSCCH. Even in channels other than PSCCH, abbreviations may be made in the same manner as the PSCCH.

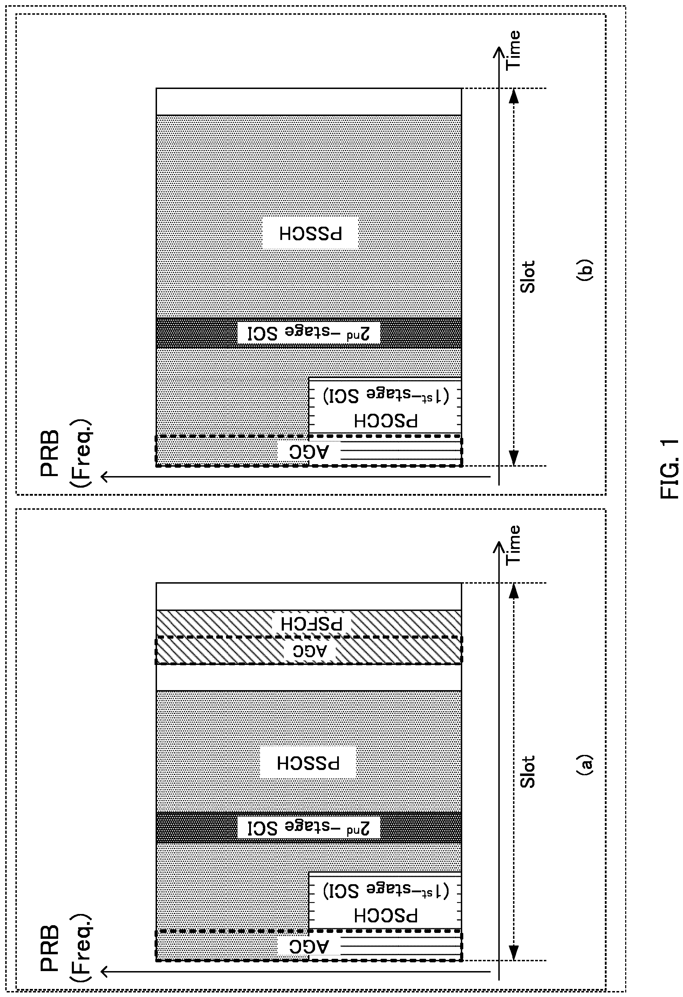

FIG. 1 illustrates exemplary mapping of PSCCH, PSSCH, and PSFCH in a slot. The horizontal axis in FIG. 1 represents the time axis, and the vertical axis represents the frequency axis in PRB (physical resource block) units. FIG. 1 illustrates two examples of Example (a) and Example (b).

Note that, as illustrated in Example (a), the PSFCH may be mapped. Alternatively, as illustrated in Example (b), the PSFCH may not be mapped due to a configuration. In a case where the PSFCH is not mapped, the area of the PSSCH may be increased.

The number of symbols of the sidelink signal in the slot may be variable according to a configuration. Further, the mapping of the 2nd-stage SCI is changed due to mapping of the DMRS of the PSSCH, which is not illustrated. The 1st-stage SCI is mapped starting from the lowest frequency resource among frequency resources to which the PSSCH is assigned. For auto gain control (AGC), copies of the starting symbols of the PSCCH and the PSSCH are mapped to the symbols before the starting symbols of the PSCCH and the PSSCH. Further, as illustrated in Example (a), a copy of the PSFCH is also mapped before the symbol of the PSFCH for AGC.

Further, in Example (a), a gap for switching between transmission and reception is mapped in the interval between the PSSCH and the PSFCH and in the interval after the last symbol of the PSFCH. In Example (b), a gap for switching between transmission and reception is mapped in the interval after the last symbol of the PSSCH. The gap may correspond to an interval in which no signal is transmitted or received.

The sidelink communication in NR includes two modes that are referred to as Mode 1 and Mode 2. In Mode 1, the base station determines a resource to be used by the terminal for the sidelink. In Mode 2, the terminal determines a resource to be used for the sidelink from resources in a resource pool configured in advance. Mode 1 represents a state in which the base station and the terminal are connected with each other, and is assumed to be used in an environment in which the terminal performing sidelink communication can receive an instruction from the base station. In Mode 2, the terminal can perform transmission in the sidelink without an instruction from the base station, and thus, sidelink communication can be performed with terminal under a different operator and/or a terminal existing outside the coverage of the base station.

For example, a resource used for the sidelink is configured by a sidelink band width part (SL BWP) and a resource pool. SL BWP specifies a frequency band that can be used for a sidelink and is configured separately from the DL BWP (downlink Band width part) and the UL BWP (uplink Band width part) configured between a base station and a terminal (Uu). However, at least a part of the frequency band that can be used for the sidelink may overlap with the UL BWP. For the resource pool, resources within the SL BWP and in the frequency-time direction are specified. A plurality of resource pools may be configured for one terminal. Frequency resources in a resource pool can be divided into units called subchannels, and resource allocation can be configured in subchannel units. The subchannel includes a plurality of physical resource blocks (PRBs). PSSCH can be allocated in units of subchannels, which are groups of a plurality of PRBs.

### [Background NR-U]

With enhanced communication capacity, the utilization of an unlicensed band in addition to a licensed band has also been studied in the 3GPP. NR that utilizes an unlicensed band is also referred to as NR-U (unlicensed). In NR-U, operations to ensure fairness in coexistence with other apparatuses, such as LAA (Licensed Assisted Access) based on Wifi (registered trademark) and/or LTE, are added and enhanced.

In the unlicensed band, a communication apparatus (for example, the base station or the terminal in NR-U) performs Listen Before Talk (LBT) in order to ensure fairness with other apparatuses, and starts transmission after confirming that another apparatus is not transmitting a signal nearby. The term LBT may be replaced with other terms such as carrier sense or sensing. The communication apparatus performs the LBT and confirms that another apparatus is not transmitting a signal nearby, and then a channel occupancy time (COT), which is the time of a channel occupancy, is configured. In the COT, the communication apparatus can transmit and receive signals in DL (downlink) resources and UL (uplink) resources.

There are two operation methods for the LBT. The first operation method is load based equipment (LBE). In LBE, when a communication apparatus acquires the COT, the communication apparatus performs Type 1 LBT (also referred to as category 4 LBT). Further, in a portion other than the head of the COT, the communication apparatus can perform Type 2 LBT and can start transmission after performing Type 2 LBT.

Note that, in the following description, the communication apparatus (for example, the base station or the terminal) "starts transmission after performing the LBT" corresponds to the communication apparatus starting transmission after confirming that the LBT has been performed and that no other apparatus is transmitting a signal nearby.

Table 1 illustrates examples of the sensing interval of LBT for transmission right acquisition in LBE and the applicable interval.

**[Table 1]**

| | Sensing interval | Applicable gap duration | |
|---|---|---|---|
| Type 1 (cat 4 LBT) | Determined by random backoff value | - | In a case where gNB (base station) or UE (terminal) acquires COT |
| | Extended when acquisition of the transmission right is unsuccessful | | |
| Type 2A (cat 2 LBT) | 25 µs | - | Transmission of DRS (Discovery Reference Signal) |
| | | 25 µs | Transmission in COT |
| Type 2B (cat 2 LBT) | 16 µs | 16 µs | Transmission in COT |
| Type 2C (cat 1 LBT) | (Not sense) | < 16 us for LBE | Transmission in COT |

In Type 1 LBT, each parameter related to LBT is configured by configuring the Channel Access Priority Class. Table 2 illustrates examples of the configuration of each parameter indicated in NPL 4. Table 2 illustrates the correspondence relationship between the Channel Access Priority Class and each parameter.

**[Table 2]**

| Channel Access Priority Class (p) | mₚ | CW_(min,p) | CW_(max,p) | T_(mcot,p) | allowed CW_p sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | { 15,31,63,127, 255,511,1023} |

In a case where the terminal (an example of the communication apparatus) repeats carrier sensing during a sensing interval of 16+9*mₚ and a sensing interval of 9*N, and confirms that the channel is available, the terminal can start transmission. Note that, a state in which the channel is available is called an idle state, and a state in which the channel is unavailable (for example, a state in which the channel is used) may be called a busy state. Confirming that the channel is available may involve confirming that another apparatus is not transmitting a signal. Further, the term sensing interval may be replaced with other terms such as sensing time, carrier sensing interval, or the like.

The value of N is decreased (counted down) by one each time it is confirmed that the channel is available. In a case where the channel is used (busy), the countdown of N is temporarily stopped, and after confirming that the channel is available for an interval of 16+9*mₚ, the countdown is resumed. The initial value of N is randomly selected from 0 to CW_p. CW_p is selected from the allowed CW_p sizes. The initial value of CW_p is CW_(min,p). In a case where communication errors exceeding a specified number occur due to collision in the previous transmission, the value of CW_p is increased by one step. For example, in a case where the Channel Access Priority Class p = 1 and CW_p = CW_(min,p), CW_p is 3 according to Table 2. In this case, the initial value of N is configured randomly from among 0 to 3, that is, from among {0, 1, 2, 3 }. For example, the sensing intervals in a case where the initial values of N are 0, 1, 2, and 3 are 25 µs, 34 µs, 43 µs, and 52 µs, respectively.

In Type 2A, when the interval between two temporally continuous resources is 25 µs, the terminal performs LBT within 25 µs. In a case where the terminal does not confirm transmission of another apparatus in the LBT, the terminal can start transmission. In Type 2B, when the interval between two temporally continuous resources is 16 µs, the terminal performs the LBT in 16 µs. In a case where the terminal does not confirm transmission of another apparatus, the terminal can start transmission. In Type 2C, in a case where the interval between two temporally continuous resources is less than 16 microseconds, the terminal can start transmission without the LBT. Note that, exceptionally, in the case of DRS (Discovery Reference Signal) transmission, due to the short transmission time for the DRS, Type 2ALBT instead of Type 1 LBT is performed, and the transmission can be started.

Type 1 LBT, Type 2A LBT, Type 2B LBT, and Type 2C LBT are examples of sensing methods for confirming availability of the channel. As described above, the sensing interval is defined according to the sensing method.

A second operation method is frame based equipment (FBE). The FBE is an operation in which it is assumed that other equipment such as Wifi is not installed in the same space, the frame period is fixed, and the LBT is performed at the head of the frame to acquire the COT. In the FBE, the COT can be acquired only from the head of the fixed frame period. Further, the FBE is defined to include an idle period of 5% or more for each fixed frame period.

In each of the following embodiments, an example in which sidelink communication is implemented in an unlicensed band will be described.

In sidelink communication in the licensed band, the PSCCH is transmitted in continuous PRBs. Further, the PSSCH is also transmitted in continuous PRBs. In a case where the PSCCH and the PSSCH are transmitted in the same symbol, the PSCCH is mapped in a PRB with a low PRB number, and the PSSCH is mapped in a PRB that has not been used for the PSCCH among the PRBs allocated to the PSSCH. The size of the PSCCH is set to any of 10, 12, 15, 20, or 25 PRBs and is set for each resource pool. The size of the subchannel of the PSSCH is set for each resource pool from among 10, 12, 15, 20, 25, 50, 75, and 100, and the subchannel position and the number of resources to which the PSSCH is allocated are specified by the PSCCH.

In the unlicensed band, there is a regulation in ETSI (ETSI EN 301 893 V2.1.1 (2017-05)) that an occupied channel bandwidth (OCB) occupies 80% to 100% of a nominal channel bandwidth (NCB). The regulation that OCB occupies 80% or more of NCB is described as an OCB regulation below. In a case where this OCB regulation is satisfied, the signal in the unlicensed band is transmitted using a frequency of 80% or more of the frequency band of the NCB.

Note that, in the following, the OCB regulation is the regulation that OCB occupies 80% or more of NCB, but the present disclosure is not limited thereto. The OCB regulation that OCB occupies 80% or more of NCB is an example of the limitation of the bandwidth with respect to the frequency band.

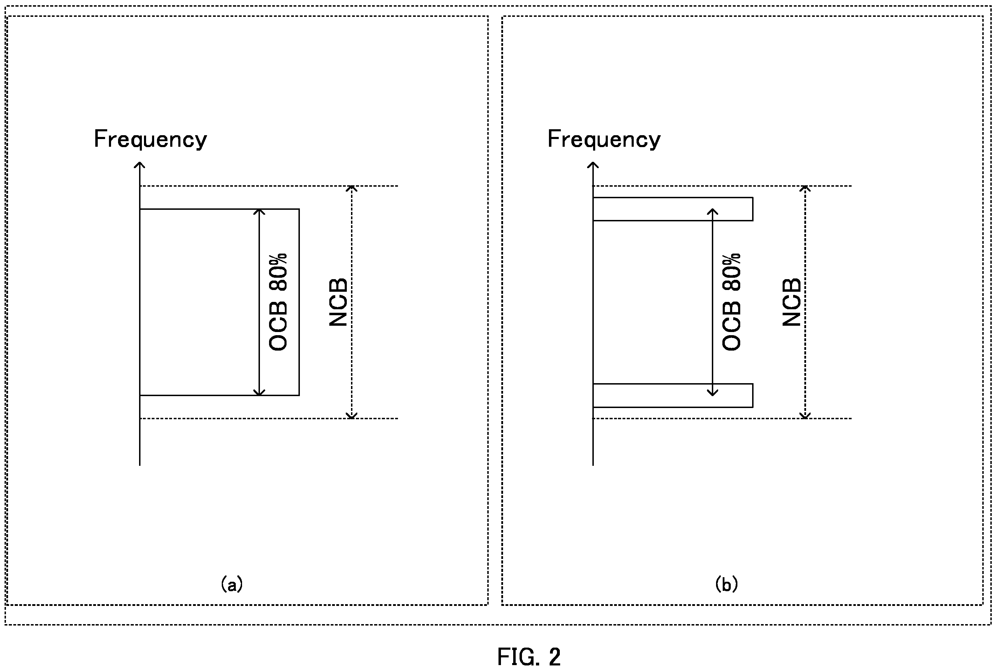

FIG. 2 illustrates an example of the regulation regarding the frequency of a signal in the unlicensed band. In FIG. 2, "OCB 80%" indicates that OCB is equal to or greater than 80% of the frequency band ofNCB. Note that, in the drawings described below, "OCB 80%" indicates that OCB is equal to or greater than 80% of the frequency band of NCB.

As illustrated in FIG. 2, the signal in the unlicensed band may be transmitted using 80% or more of the frequency band of NCB continuously, or may be mapped such that the width of both ends on the frequency axis of the plurality of divided resources becomes 80% or more of the frequency band of NCB.

In NR-U and LAA, interlace allocation is introduced to satisfy the regulation of OCB in this frequency domain.

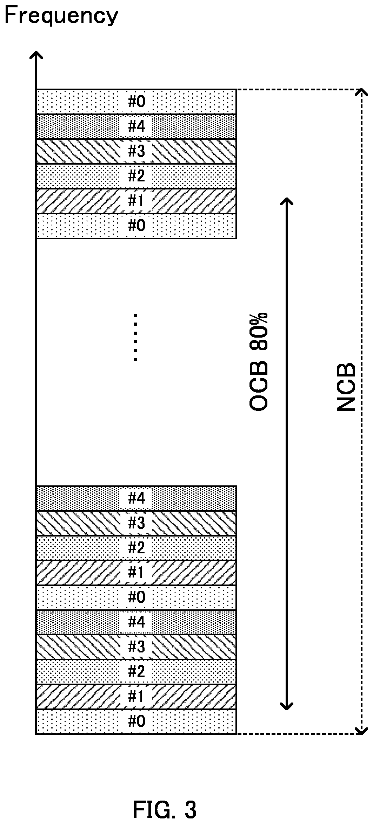

Table 3 illustrates an example of the relationship between subcarrier spacing (SCS) and interlace. FIG. 3 illustrates an example of interlace allocation. The letter M in Table 3 indicates the number of interlaces, and the letter N indicates the number of PRBs. FIG. 3 illustrates an interlace allocation in the case where SCS is 30 kHz. In the NR-U interlace allocation, as illustrated in Table 3 and FIG. 3, for example, when the SCS is 30 kHz, there are five (M=5) interlaces in a 20 MHz band, and the number of PRBs (N PRBs) for one interlace is 10 or 11.

**[Table 3]**

| **SCS** | ***M*** | ***N PRBs*** |
|---|---|---|
| 15 kHz | 10 | 10 or 11 |
| 30 kHz | 5 | 10 or 11 |

In sidelink communication in the unlicensed band, there is room for consideration regarding resource mapping that satisfies the aforementioned OCB regulation. For example, a study is not sufficiently performed for making the resource mapping of a sidelink communication signal an appropriate resource mapping that satisfies the regulation of OCB.

Accordingly, in a non-limiting embodiment of the present disclosure, a method capable of appropriately performing resource mapping in the frequency direction in an unlicensed band will be described.

For example, in each of the embodiments described below, a sidelink signal is transmitted in the unlicensed band by mapping the sidelink signal in a dispersed manner on the frequency axis. Thus, it is possible to satisfy the OCB regulation described above and to perform appropriate resource mapping.

Note that, in each embodiment described below, sidelink communication is given as an example, but the present disclosure is not limited to sidelink communication. Further, each embodiment described below exemplifies an unlicensed band, but the present disclosure is not limited to unlicensed bands

### [Overview of Communication System]

A communication system according to an embodiment of the present disclosure includes base station 100 and terminal 200.

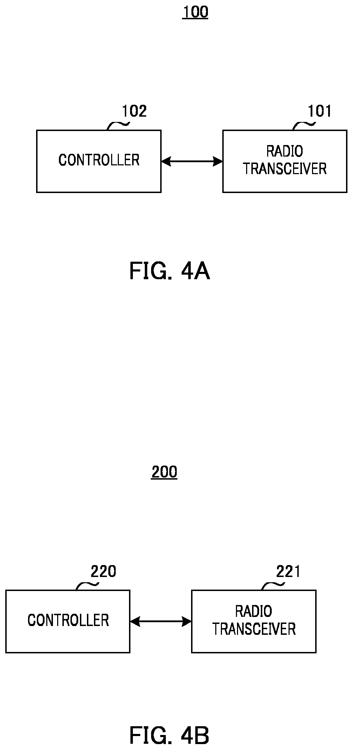

FIG. 4A is a block diagram illustrating an exemplary configuration of a part of base station 100. In base station 100 illustrated in FIG. 4A, controller 102 controls communication via a link called Uu between terminal 200 and base station 100. Radio transceiver 101 transmits a signal through a link called Uu under the control of controller 102. Further, the controller 102 may perform control related to sidelink communication between the plurality of terminals (for example, determining the resource in Mode 1).

FIG. 4B is a block diagram illustrating an exemplary configuration of a part of terminal 200. In terminal 200 illustrated in FIG. 4B (an example of the "communication apparatus"), controller 220 (corresponding to, for example, control circuitry) maps a signal for sidelink communication in a frequency resource that satisfies a bandwidth limitation related to a frequency band in an unlicensed band. Further, radio transceiver 221 (corresponding to, for example, transmission circuitry) transmits the signal. Note that the signal of the sidelink communication may be at least one of a synchronization signal, a broadcast signal, a data signal, a control signal, or a feedback signal. Further, the limitation of the bandwidth in the frequency band may correspond to, for example, the aforementioned OCB regulation, or may correspond to a limitation different from the aforementioned OCB regulation.

### (Embodiment 1)

In Embodiment 1, a case will be described in which, when a terminal transmits a synchronization signal and/or a broadcast signal in an unlicensed band, the terminal transmits the synchronization signal and/or the broadcast signal in a dispersed manner on the frequency axis so as to satisfy the OCB regulation.

The S-PSS/S-SSS, which is the synchronization signal for the sidelink, and a broadcast signal (for example, PSBCH) are transmitted in the same slot. The S-PSS/S-SSS and a broadcast signal (for example, PSBCH) are collectively also referred to as an S-SS/PSBCH block. Further, in the following description, the "synchronization signal" may include both a synchronization signal and a broadcast signal.

In the licensed band, the S-SS/PSBCH block is mapped in 132 continuous subcarriers (hereinafter, each of the 132 subcarriers may be referred to as index #0 to #131). The position of the subcarrier for index #66 is configured by sl-AbsoluteFrequencySSB, which is a parameter set in a higher layer or is predefined, and the frequency position of the S-SS/PSBCH block is determined.

The 132 subcarriers correspond to 11 continuous PRBs. In a slot in which the S-SS/PSBCH block is transmitted, the terminal does not transmit PSCCH and/or PSSCH. Note that, in the following, PSCCH and/or PSSCH may be referred to as "PSCCH/PSSCH" or "PSSCH/PSCCH."

sl-AbsoluteFrequencySSB is selected from a position with a frequency interval called a synchronization raster and can be identified by a Global Synchronization Channel Number (GSCN). When the terminal is powered on or when synchronization is lost, the terminal is configured to detect a synchronization signal.

In a case where the SCS is 30 kHz and the 20 MHz band is used, when the allocation of the S-SS/PSBCH block in the licensed band is applied to the unlicensed band as it is, transmission is performed with only 11 PRBs out of 51 PRBs, for example. In a case where transmission is performed with only 11 PRBs out of 51 PRBs, there is an issue that the OCB regulation illustrated in FIG. 2 is not satisfied.

Further, in NR-U, GSCN is configured in the frequencies n46 and n96, but the positions configured as GSCN are absolute positions with respect to the band. For this reason, for example, the relative position from the position of PRB #0 is different depending on the configuration of the 20 MHz band to be used.

Table 4 illustrates an example of the positions of SS/PSBCH blocks. Table 4 illustrates the range of GSCN for the frequencies of n46 and n96. As illustrated in Table 4, the position of the SS/PSBCH block may be limited to the number indicated in the NOTE among GSCNs. In n46 and n96, GSCN is configured every 20 Hz band, but the positions configured with GSCNs are absolute positions with respect to the band. Therefore, the relative positions from the position of PRB #0 differ depending on the configuration of the 20 MHz band to be used, for example.

**[Table 4]**

| **NR operating band** | **SS Block SCS** | **SS Block pattern¹** | **Range of GSCN (First - <Step size> - Last)** |
|---|---|---|---|
| **n46³** | **30 kHz** | **Case C** | **8993 - <1> - 9530** |
| **n96⁴** | **30 kHz** | **Case C** | **9531-<1>-10363** |

| | | | |
|---|---|---|---|
| NOTE 3: The following GSCN are allowed for operation in band n46: GSCN = 8996, 9010, 9024, 9038, 9051, 9065, 9079, 9093, 9107, 9121, 9218, 9232, 9246, 9260, 9274, 9288, 9301, 9315, 9329, 9343, 9357, 9371, 9385, 9402, 9416, 9430, 9444, 9458, 9472, 9485, 9499, 9513. NOTE 4: The following GSCN are allowed for operation in band n96: GSCN = 9548, 9562, 9576, 9590, 9603, 9617,9631, 9645, 9659, 9673, 9687, 9701, 9714, 9728, 9742, 9756, 9770, 9784, 9798, 9812, 9826, 9840, 9853, 9867, 9881, 9895, 9909, 9923, 9937, 9951, 9964, 9978, 9992, 10006, 10020, 10034, 10048, 10062, 10076, 10090, 10103, 10117, 10131, 10145, 10159, 10173, 10187, 10201, 10214, 10228, 10242, 10256, 10270, 10284, 10298, 10312, 10325, 10339, 10353. | | | |

As described above, when the allocation of the S-SS/PSBCH block in the licensed band is applied to the unlicensed band, the allocation of the S-SS/PSBCH block may not satisfy the OCB regulation. Accordingly, in the present Embodiment 1, S-SS/PSBCH blocks are allocated on the frequency axis in a dispersed manner to satisfy the OCB regulation by the following operation example.

### [Operation Example 1-1]

Operation Example 1-1 exemplifies a case where an S-SS/PSBCH block for sidelink is transmitted at a position configured by sl-AbsoluteFrequencySSB, and additionally, an S-SS/PSBCH block or a part of an S-SS/PSBCH block is transmitted at the position configured by sl-AbsoluteFrequencySSB and at another position, thereby satisfying OCB regulation.

In Operation Example 1-1, the frequency position specified by sl-AbsoluteFrequencySSB may be common with the value of GSCN of AbsoluteFrequencySSB used for a base station-terminal Uu link.

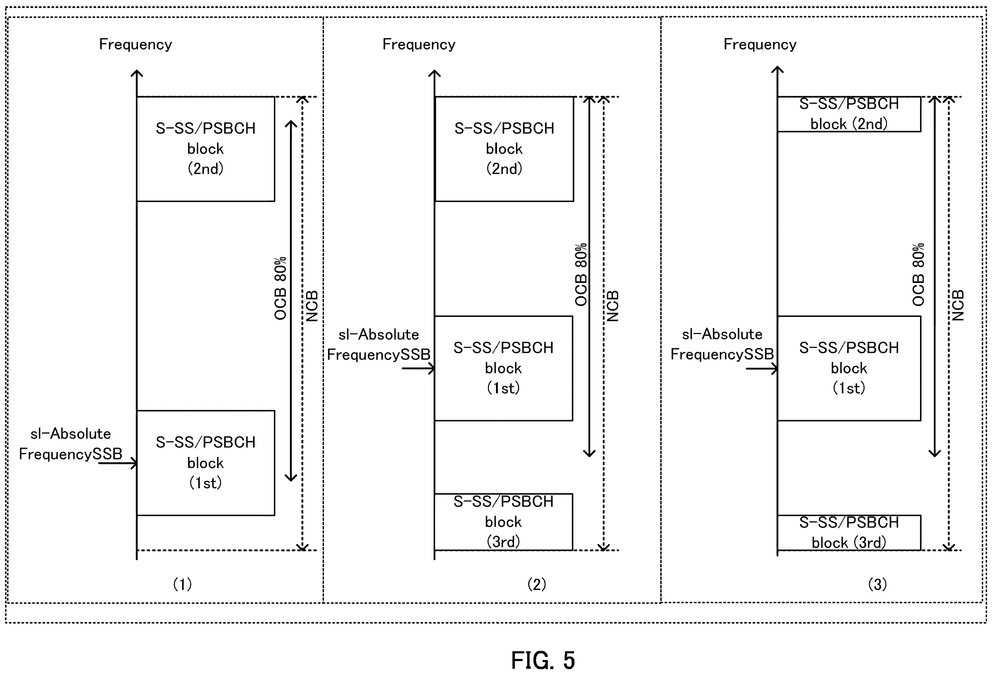

FIG. 5 illustrates an example of S-SS/PSBCH block mapping in Operation Example 1-1 of Embodiment 1. Exemplary mapping of S-SS/PSBCH blocks on the frequency axis is illustrated in (1), (2), and (3) of FIG. 5. Note that the vertical axes in (1), (2), and (3) of FIG. 5 represent frequency axes.

For example, in Operation Example 1-1, as illustrated in (1) of FIG. 5, the OCB regulation is satisfied by transmitting the S-SS/PSBCH block (S-SS/PSBCH block (1st) in FIG. 5) configured by sl-AbsoluteFrequencySSB, and additionally, the S-SS/PSBCH block (S-SS/PSBCH block (2nd) in FIG. 5). Hereinafter, in the same manner as in FIG. 5, an S-SS/PSBCH block configured by sl-AbsoluteFrequencySSB is referred to as "S-SS/PSBCH block (1st)," and an S-SS/PSBCH block to be additionally transmitted is referred to as "S-SS/PSBCH block (2nd)" or "S-SS/PSBCH block (3rd)." As illustrated in (1), (2), and (3) in FIG. 5, sl-AbsoluteFrequencySSB indicates, for example, the center position of the S-SS/PSBCH block (1st) in the frequency direction. In other words, S-SS/PSBCH block (1st) is mapped in a band centered on a position indicated by sl-AbsoluteFrequencySSB in the frequency direction.

S-SS/PSBCH block (2nd) may be the same signal as S-SS/PSBCH block (1st), a signal in which the PRBs of S-SS/PSBCH block (1st) are arranged in reverse order, or a signal copied from a part of S-SS/PSBCH block (1st). S-SS/PSBCH block (2nd) may be mapped from the edge of the NCB band.

Further, for example, in Operation Example 1-1, as illustrated in (2) of FIG. 5, in addition to the S-SS/PSBCH block (1st) configured by sl-AbsoluteFrequencySSB, when the S-SS/PSBCH block (2nd) is transmitted but the OCB regulation is still not satisfied, the S-SS/PSBCH block (3rd) may be further transmitted as illustrated in FIG. 5.

S-SS/PSBCH block (3rd) may be mapped at the end of the frequency on the frequency axis opposite to S-SS/PSBCH block (2nd). For example, in a case where the SCS is 30 kHz and the band is 20 MHz, 51 PRBs are included in the NCB. In a case where the frequency position of the S-SS/PSBCH block specified in advance by GSCN is PRB#10 to PRB#21, although the S-SS/PSBCH block is mapped to PRB with the larger frequency number (for example, PRB#39 to PRB#50), the OCB regulation cannot be satisfied. Thus, the OCB regulation is satisfied by transmitting the S-SS/PSBCH block (3rd).

Further, for example, in Operation Example 1-1, as illustrated in (3) of FIG. 5, in addition to the S-SS/PSBCH block (1st) configured by sl-AbsoluteFrequencySSB, the S-SS/PSBCH block (2nd) and the S-SS/PSBCH block (3rd) may be transmitted regardless of the position configured by the S-SS/PSBCH block (1st).

Note that S-SS/PSBCH block (2nd) and S-SS/PSBCH block (3rd) may be signals in which at least a part of the signal in the S-SS/PSBCH block is copied, such as a signal identical to the DMRS (demodulation reference signal) in the PSBCH block, or signals in which the sequence of at least a part of the signal in the S-SS/PSBCH block is changed. Further, the number of PRBs for the S-SS/PSBCH block (2nd) and the S-SS/PSBCH block (3rd) may be 11 PRBs, or may be a number less than 11 PRBs, such as 1 PRB or 2 PRBs. Further, the total size of the S-SS/PSBCH block (2nd) and the S-SS/PSBCH block (3rd) may be defined as 11 PRBs, or the S-SS/PSBCH block (2nd) and the S-SS/PSBCH block (3rd) may be combined, and a signal equivalent to that in the S-SS/PSBCH block (1st) may be transmitted.

As described above, in Operation Example 1-1, even in the case where the transmission of only an S-SS/PSBCH block configured by sl-AbsoluteFrequencySSB does not satisfy the OCB regulation, the transmission of an additional signal makes it possible to satisfy the OCB regulation. Further, the position of a signal (for example, S-SS/PSBCH block (2nd)) that is transmitted additionally may be a position set by a fixed value, a position defined for each resource pool, or a position notified in S-SS/PSBCH block (1st).

### [Operation Example 1-2]

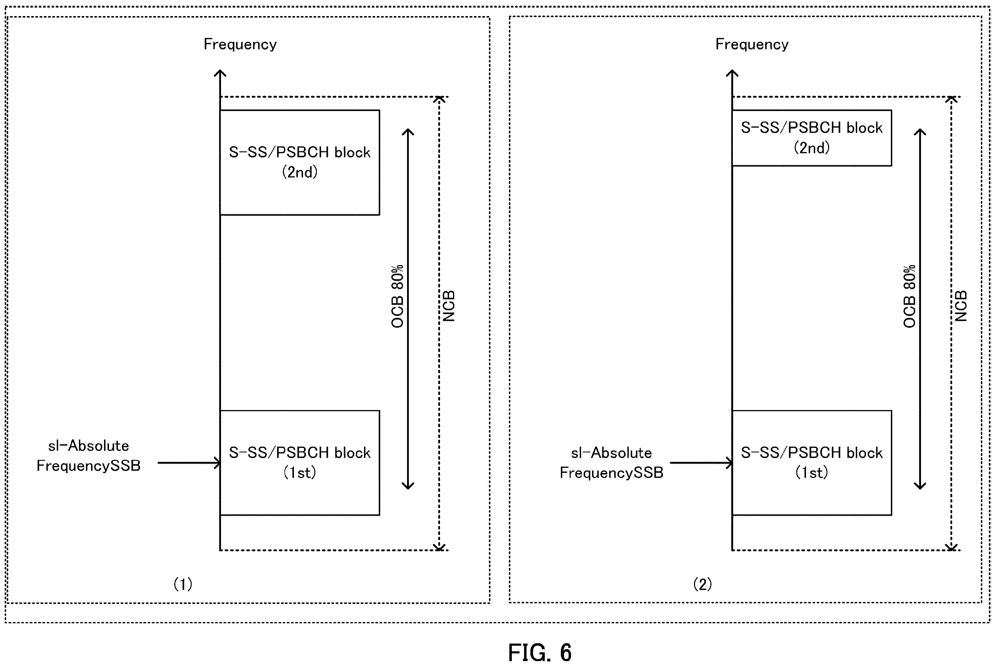

FIG. 6 illustrates an example of S-SS/PSBCH block mapping in Operation Example 1-2 of Embodiment 1. Exemplary mapping of S-SS/PSBCH blocks on the frequency axis is illustrated in (1) and (2) of FIG. 6. Note that the vertical axes in (1) and (2) of FIG. 6 represent the frequency axes.

In Operation Example 1-2, as illustrated in FIG. 6, in the unlicensed band for the sidelink, the OCB regulation is satisfied by the position of the S-SS/PSBCH block (1st) configured by sl-AbsoluteFrequencySSB and the additionally transmitted S-SS/PSBCH block (2nd).

In Operation Example 1-2, the position of the S-SS/PSBCH block specified by sl-AbsoluteFrequencySSB may be different from the value of GSCN configured by AbsoluteFrequencySSB used for the S-SS/PSBCH block in the Uu link.

As described above, in Operation Example 1-2, it is possible to satisfy the OCB regulation by configuring the position of the S-SS/PSBCH block configured by sl-AbsoluteFrequencySSB as one end in the frequency direction and the position of the additionally transmitted S-SS/PSBCH block as the other end in the frequency direction. Further, by configuring the positions at different positions from the synchronization signals of the Uu link, it is possible to prevent interference with each other.

Note that, as illustrated in (1) of FIG. 6, the S-SS/PSBCH block (2nd) to be additionally transmitted may have the same size as the S-SS/PSBCH block (1st). In this case, the S-SS/PSBCH block (2nd) to be additionally transmitted may be a copy of the S-SS/PSBCH block (1st). Further, the S-SS/PSBCH block (2nd) to be additionally transmitted may have a size different from that of the S-SS/PSBCH block (1st) as illustrated in (2) of FIG. 6. In this case, the S-SS/PSBCH block (2nd) to be additionally transmitted may be a copy of a part of the S-SS/PSBCH block (1st). Alternatively, the S-SS/PSBCH block (2nd) to be transmitted in (2) of FIG. 6 may be defined in the same manner as the S-SS/PSBCH block (2nd) illustrated in (3) of FIG. 5.

### [Operation Example 1-3]

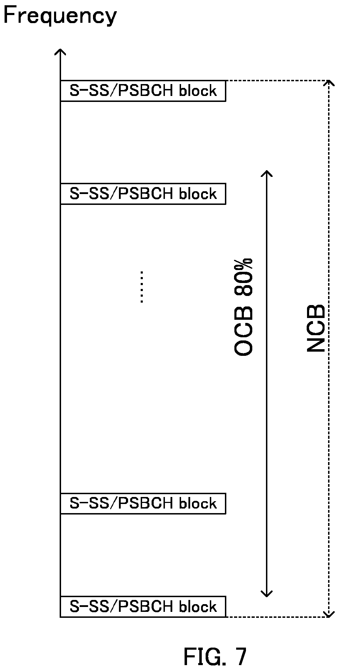

FIG. 7 illustrates an example of S-SS/PSBCH block mapping in Operation Example 1-3 of Embodiment 1. FIG. 7 illustrates an example of the mapping of S-SS/PSBCH blocks on the frequency axis. Note that the vertical axis in FIG. 7 represents the frequency axis.

In Operation Example 1-3, the S-SS/PSBCH block is transmitted by interlacing as illustrated in FIG. 7. The interlacing to be used may be defined according to the number of PRBs. For example, in a resource of 11 PRBs, the transmission of the S-SS/PSBCH block in interlace #0 may be defined. In this case, a signal identical to the S-SS/PSBCH block of the licensed band transmitted in 11 PRBs is allocated to an interlaced PRB. Further, in a case where the guard band is configured for each frequency band in which LBT is performed, the number of PRBs may not be 51 PRBs even when the frequency band in which LBT is performed is a 20 MHz band. At that time, when it is not possible to secure 11 PRBs in one interlace, the S-SS/PSBCH block may be transmitted using two interlace numbers. Further, the mapping of the interlace may be the same as the mapping of the PSCCH/PSSCH or may be different.

### [Configuration of Terminal 200]

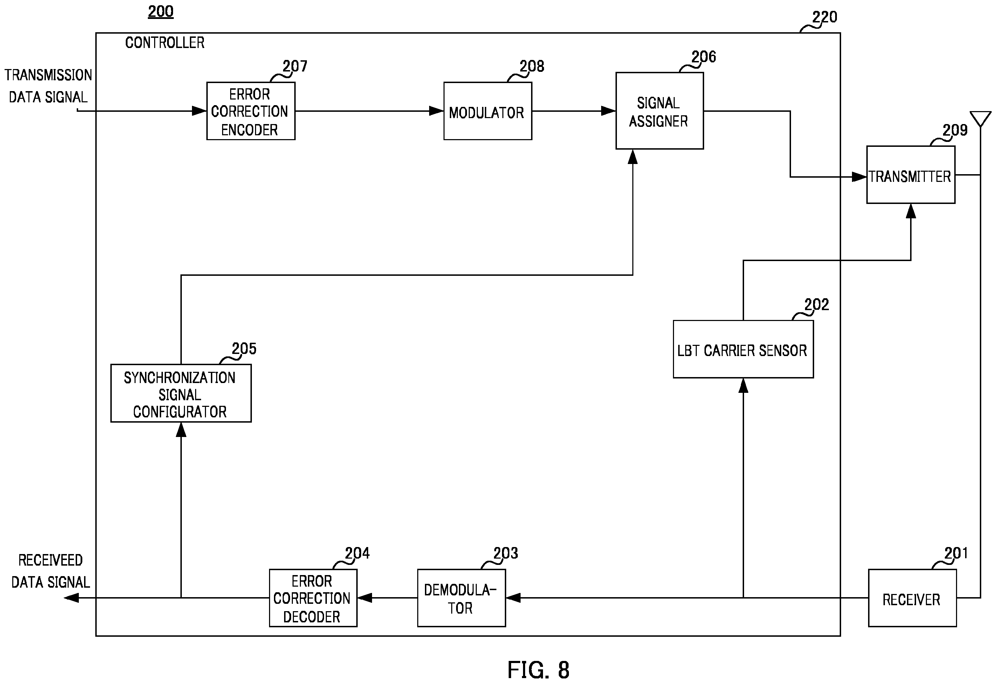

FIG. 8 is a block diagram illustrating a configuration of terminal 200 according to Embodiment 1. Terminal 200 illustrated in FIG. 8 includes receiver 201, LBT carrier sensor 202, demodulator 203, error correction decoder 204, synchronization signal configurator 205, signal assigner 206, error correction encoder 207, modulator 208, and transmitter 209. Note that LBT carrier sensor 202, demodulator 203, error correction decoder 204, synchronization signal configurator 205, signal assigner 206, error correction encoder 207, and modulator 208 may be included in controller 220. Further, receiver 201 and transmitter 209 may correspond to radio transceiver 221 illustrated in FIG. 4B.

Terminal 200 may be a transmission terminal that transmits a sidelink signal in sidelink communication or a reception terminal that receives a sidelink signal in sidelink communication.

Receiver 201 receives a reception signal via an antenna, and performs reception processing such as down-conversion on the reception signal. The reception signal is, for example, a sidelink signal including PSSCH and/or PSCCH. Note that the sidelink signal may include PSFCH. Further, the sidelink signal may include a synchronization signal and/or a broadcast signal. Further, the reception signal received by receiver 201 may include an idle period or may include a signal other than a sidelink signal. Receiver 201 outputs the reception signal after the reception processing to demodulator 203 and LBT carrier sensor 202.

Demodulator 203 performs demodulation processing on the reception signal. Demodulator 203 outputs the demodulated signal obtained through the demodulation processing to error correction decoder 204.

Error correction decoder 204 decodes the demodulated signal outputted from demodulator 203 and outputs it as reception data. Further, error correction decoder 204 outputs a control signal related to the synchronization signal included in the reception data to synchronization signal configurator 205.

Synchronization signal configurator 205 identifies a position (for example, the frequency position of the S-SS/PSBCH block) in which a synchronization signal (for example, the S-SS/PSBCH block) is to be transmitted, based on information regarding the synchronization signal defined in the control signal of a higher layer or in a pre-configuration called pre-configured. Further, in a case where the frequency position of the S-SS/PSBCH block does not satisfy the OCB regulation, synchronization signal configurator 205 generates a signal to be additionally transmitted and outputs the generated S-SS/PSBCH block to signal assigner 206. Note that synchronization signal configurator 205 may output information on the frequency position of the S-SS/PSBCH block to signal assigner 206.

Error correction encoder 207 acquires a data signal, performs error correction encoding on the data signal and outputs the error correction encoded data signal to modulator 208.

Modulator 208 modulates the data signal received from error correction encoder 207, and outputs the modulated signal to signal assigner 206.

Signal assigner 206 allocates the modulation signal outputted from modulator 208 to a resource. Further, signal assigner 206 allocates the S-SS/PSBCH block outputted from synchronization signal configurator 205 to a resource. At that time, signal assigner 206 may perform resource allocation based on information regarding the frequency position of the S-SS/PSBCH block outputted from synchronization signal configurator 205. Signal assigner 206 outputs the transmission signal after performing the resource allocation to transmitter 209.

LBT carrier sensing processor 202 performs carrier sense (also referred to as LBT) based on the reception signal outputted from receiver 201. LBT carrier sensing processor 202 may judge, based on the reception signal outputted from receiver 201, whether the channel state is "busy" or "idle." In other words, LBT carrier sensing processor 202 may judge whether the channel is available based on the reception signal outputted from receiver 201. LBT carrier sensing processor 202 outputs information indicating the judged channel state to transmitter 209.

In a case where the result of the sensing acquired from LBT carrier sensor 202 indicates an Idle state, transmitter 209 performs a transmission process such as up-conversion on the transmission signal, and transmits the transmission signal after the transmission process via an antenna.

In Embodiment 1 described above, when a synchronization signal and/or a broadcast signal is transmitted, the synchronization signal and/or the broadcast signal is transmitted in a first frequency resource indicated by a parameter (for example, sl-AbsoluteFrequencySSB) and a second frequency resource different from the first frequency resource. With this configuration, it is possible to disperse the frequency resources for transmitting the synchronization signal and/or the broadcast signal on the frequency axis, thereby satisfying the OCB regulation and appropriately performing resource mapping in the frequency direction.

### (Embodiment 2)

In Embodiment 2, an example is shown in which, when the terminal maps PSCCH and PSSCH in the unlicensed band, the mapping satisfies the OCB regulation. PSSCH is an example of a data signal, and PSCCH is an example of a control signal (or control information).

Table 5 illustrates a relationship between SCS, bandwidth, and the maximum number of PRBs in NR. In NR, the maximum number of PRBs is defined according to the bandwidth, as illustrated in Table 5.

**[Table 5]**

| SCS | 20MHz | 40MHz | 60MHz | 80MHz | 100MHz |
|---|---|---|---|---|---|
| 15kHz | 106 | 216 | - | - | - |
| 30kHz | 51 | 106 | 162 | 217 | 273 |
| 60kHz | 24 | 51 | 79 | 107 | 135 |

When the frequency band is configured with SL BWP (Sidelink Band Width Part), the number of PRBs can be set to a value equal to or less than the maximum number of PRBs. Further, in the configuration of the resource pool of the sidelink, two parameters, "sl-StartRB-Subchannel-r16" and "sl-NumSubchannel-r16," are used to specify the start RB of the subchannel and the number of subchannels in the resource pool.

### [Operation Example 2-1]

In Operation Example 2-1, the size of the Subchannel to be used for PSSCH allocation is matched to SL BWP. When the size of the Subchannel is matched to the SL BWP, the number of PRBs included in the BWP configured in the SL BWP is configured as one Subchannel.

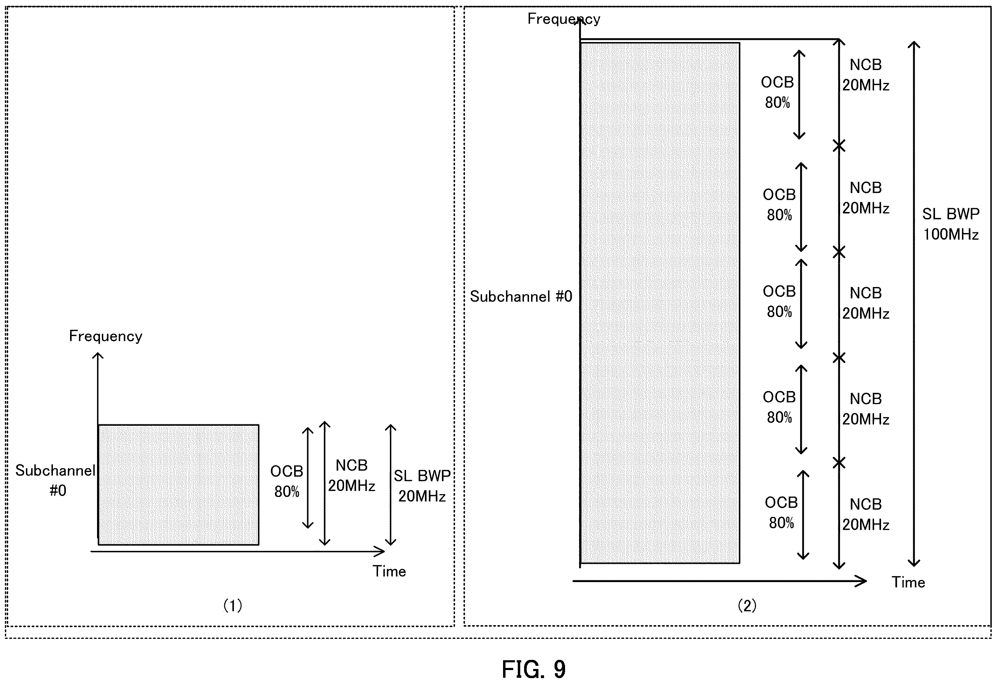

FIG. 9 illustrates an example of a Subchannel in Operation Example 2-1 of Embodiment 2. Exemplary Subchannel configurations for different SL BWPs are illustrated (1) and (2) of FIG. 9. Note that the vertical axes in (1) and (2) of FIG. 9 represent frequency axes, and the horizontal axes represent time axes.

For example, as illustrated in (1) of FIG. 9, in a case where SL BWP is configured for PRB with a 20MHz band, when the SCS is 30kHz, the maximum value of the number of PRBs is 51 PRBs as shown in Table 5. In a case where the Subchannel size is 51 PRBs, when a PSSCH is transmitted, the PSSCH is transmitted in 51 continuous PRBs, thereby satisfying the OCB regulation that the OCB occupies 80% or more of the NCB with the 20 MHz band.

Further, in a case where SL BWP is configured with the maximum value of PRB of a 100 MHz band, the maximum value of the number of PRBs is 273 PRBs in a case where the SCS is 30 kHz as shown in Table 5. In a case where the Subchannel size is 273 PRBs, when a PSSCH is transmitted, the PSSCH is transmitted in 273 continuous PRBs. In this case, as illustrated in (2) of FIG. 9, the OCB regulation that OCB occupies 80% or more of 20MHz NCB is satisfied in each of the five frequency bands obtained by dividing 100 MHz into 20 MHz segments.

The number of PRBs included in the SL BWP may be variable based on a configuration called (pre-)configured and/or notification from a higher layer. Further, when a guard band is provided at the edge of the band or for each band of NCB, the number of PRBs may be separately set to a value smaller than the number of PRBs included in the SL BWP. In that case, a Subchannel size that satisfies the OCB regulation that OCB occupies 80% or more of the 20 MHz NCB is set.

Further, in a case where a guard band is provided for each band of NCBs, when resources are allocated to continuous bands of NCB, the resources may also be allocated to PRBs corresponding to a guard band that is not included in the Subchannel.

In a band in which PRBs included in the Subchannel are mapped, the terminal performs LBT, and starts transmission when the terminal confirms that the channel is not used. In a case where one Subchannel spans a plurality of LBT bandwidths (BWs), the terminal performs LBT in the plurality of LBT BWs, and starts transmission when the terminal confirms that the channel is not used in all the LBT BWs. Note that, in Operation Example 2-1, PSSCH is transmitted using a single Subchannel.

### [Operation Example 2-2]

In Operation Example 2-2, the size of the Subchannel to be used for PSSCH allocation is matched to LBT BWP (bandwidth part).

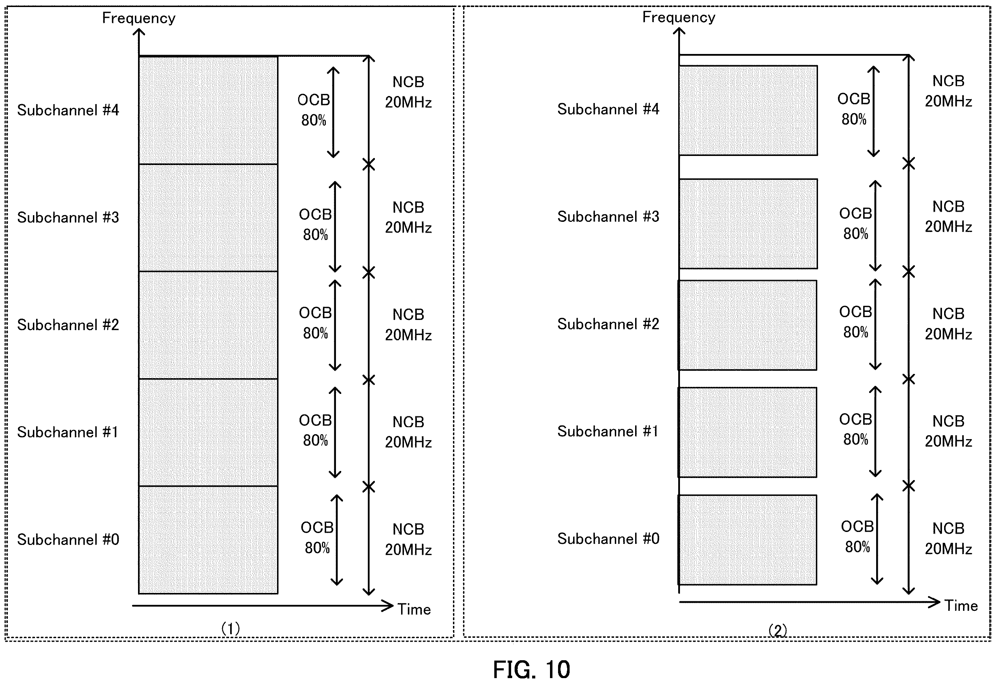

FIG. 10 illustrates an example of a Subchannel in Operation Example 2-2 of Embodiment 2. Exemplary configurations of different Subchannels are illustrated in (1) and (2) of FIG. 10. Note that the vertical axes in (1) and (2) of FIG. 10 represent frequency axes, and the horizontal axes represent time axes.

When the size of the Subchannel is matched to the LBT BW, for example, in the case where the BW of LBT is 20MHz, the number of PRBs included in 20MHz is the Subchannel size. For example, in a case where the SCS is 30 kHz, when all PRBs in a 20 MHz band are considered the Subchannel size, the Subchannel size is 51 PRBs.

Further, as illustrated in (1) of FIG. 10, in a case where the BW of LBT is 20 MHz and the SL BWP is 100 MHz, the Subchannel size may be the number of PRBs included in the 20 MHz LBT BW, and the number of Subchannels can be five.

Further, as illustrated in (2) of FIG. 10, when there is a guard band for each 20 MHz in the BW of LBT, the Subchannel size may be set small compared to the case when there is no guard band. In that case, the number of PRBs in the Subchannel size is configured to a value that satisfies the regulation that OCB occupies 80% or more. The guard band may be signaling in a higher layer called (pre-)configured, and/or may be a configuration defined in advance. In a case where there is a guard band, the terminal can confirm through LBT that the channel is not used in a band of a 20 MHz bandwidth. For this reason, even in a case where a channel in one of two adjacent 20 MHz bands is in use, transmission can be started in the 20 MHz band in which the channel is not in use. In a case where SL BWP is 100 MHz, LBT is performed for each band of 20 MHz, and in a band in which the availability of a channel is confirmed by LBT, transmission can be performed in the available channel.

In Operation Examples 2-1 and 2-2, the size of the PSCCH may be selected from 10, 12, 15, 20, and 25 PRBs in the same manner as in the licensed band. Further, PSSCH may be mapped in the selected PRB. In this case, among the multiple PRBs, PSSCH may be mapped starting from the PRB with a lower number.

Further, particularly in Operation Example 2-2, the size of the PSCCH may be matched to the size of the Subchannel. By matching the size of the PSCCH to the size of the Subchannel, it is possible to avoid the transmission of the PSCCH beyond the LBT BW.

### [Operation Example 2-3]

In Operation Example 2-3, PSSCH/PSCCH is transmitted by interlacing. Note that a continuous interlace number may be assigned to the PSSCH.

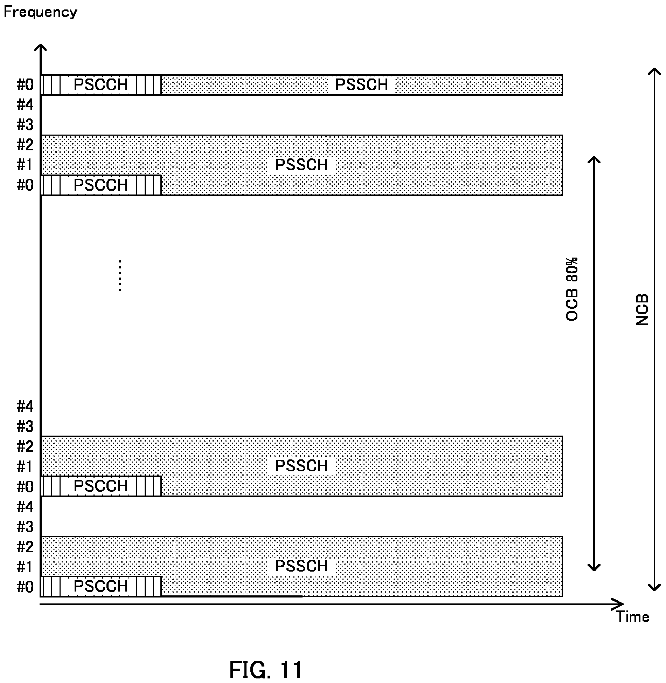

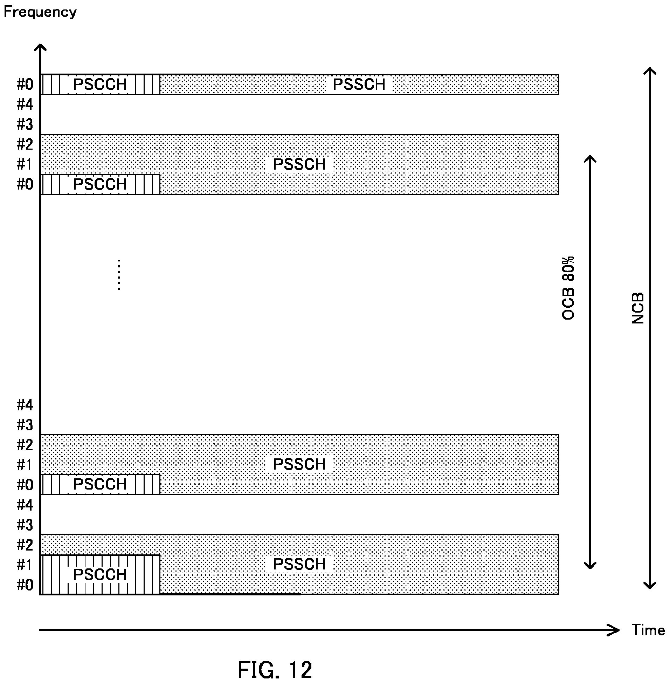

FIG. 11 illustrates a first example of the allocation in Operation Example 2-3 of Embodiment 2. FIG. 12 illustrates a second example of the allocation in Operation Example 2-3 of Embodiment 2.

For example, in FIG. 11, allocating PSCCH to one interlace is configured in a resource pool unit. In the example of FIG. 11, PSCCH is allocated to interlace #0, and PSSCH is allocated to interlaces #0, #1, and #2. In interlace #0, PSCCH is mapped in the symbols at the front of the slot, and thus PSSCH is transmitted in the symbol where PSCCH is not mapped in interlace #0. Further, PSCCH is allocated to the interlacing that is the lowest among the interlaces to which PSSCH is allocated.

Note that, in FIG. 11, the number of interlaces allocated to PSCCH is one, but the number of interlaces allocated to PSCCH may be more than one. For example, the number of interlaces allocated to PSCCH may be configured for each resource pool. Further, the number of interlaces allocated to PSCCH may be set according to the size of the PSCCH. For example, in a case where PSSCH is allocated to interlaces #2, #3, and #4, and PSCCH has a size corresponding to two interlaces, the PSCCH is mapped in the lower interlaces among the interlaces to which PSSCH is allocated, that is, in interlaces #2 and #3. A terminal other than the transmission terminal attempts to detect PSCCH in each of interlaces #0, #1, #2, #3, or #4 in a case where PSCCH has a size of one interlace.

In a case where the number of PRBs included in an interlace is different depending on the interlace number, the number of PRBs used for PSCCH may be different depending on the interlace number to be used. Further, in a case where only interlace #0 has 11 PRBs and the other interlace numbers each have 10 PRBs, the format of interlace #0 may be adjusted to the formats of the other interlaces by not mapping a PSSCH in the last PRB of interlace #0 but mapping PSCCH therein.

For example, FIG. 12 illustrates an example in which PSCCH is specified in size in units of PRBs. FIG. 12 illustrates a case where PSCCH is allocated to 12 PRBs as an example. In a case where interlace #0 includes 11 PRBs, the number of PRBs is insufficient with only interlace #0, and thus, the PRB with the lowest PRB number in interlace #1 is used to secure 12 PRBs. In the example of FIG. 12, PSSCH is mapped in interlaces #0, #1, and #2. Since PSCCH is mapped at a symbol on the front side of the slot, PSSCH is transmitted in symbols where PSCCH is not mapped.

According to Operation Example 2-3, PSSCH and PSCCH can be mapped by interlacing, thereby satisfying the OCB regulation that OCB occupies 80% or more of NCB. Further, in transmitting continuous PRBs, the number of PRBs to be transmitted can be reduced as compared to the case of satisfying the OCB regulation, and thus Operation Example 2-3 is suitable for terminals with limited transmission power.

### [Configuration of Terminal 200a]

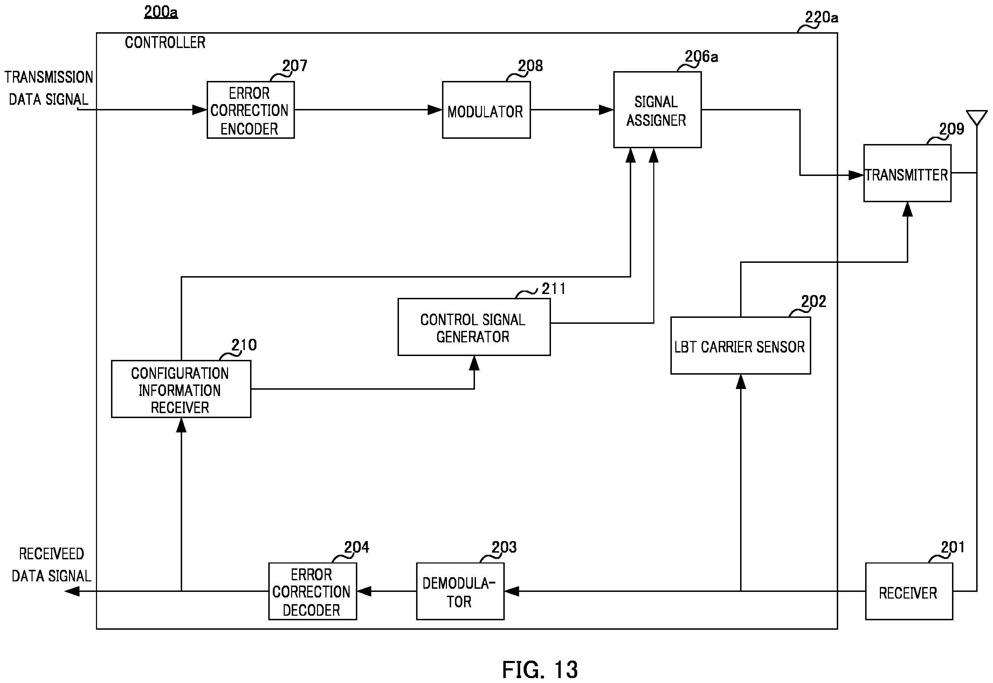

FIG. 13 is a block diagram illustrating a configuration of terminal 200a according to Embodiment 2. Note that, in FIG. 13, the same configuration as in FIG. 8 is denoted by the same reference numerals, and description thereof may be omitted. Note that LBT carrier sensor 202, demodulator 203, error correction decoder 204, signal assigner 206a, error correction encoder 207, modulator 208, configuration information receiver 210, and control signal generator 211 may be included in controller 220a. Controller 220a may be considered as another example of controller 220 illustrated in FIG. 8. Further, receiver 201 and transmitter 209 may correspond to radio transceiver 221 illustrated in FIG. 4B.

In sidelink communication, terminal 200a may be a transmission terminal that transmits a sidelink signal or a reception terminal that receives the sidelink signal. Terminal 200a may be seen as another example of terminal 200 illustrated in FIG. 8. Hereinafter, differences between terminal 200 illustrated in FIG. 8 and terminal 200a will be described.

Configuration information receiver 210 acquires configuration information on the defined size of a Subchannel and the size of a PSCCH in the control signal of the higher layer or in a pre-configuration called pre-configured. Configuration information receiver 210 outputs the acquired configuration information to signal assigner 206a and control signal generator 211.

Control signal generator 211 determines the size of the PSCCH (for example, the number of PRBs) based on the configuration information outputted from configuration information receiver 210. Control signal generator 211 generates signals for the 1st stage SCI and the 2nd stage SCI based on control information related to sidelink communication, and outputs the generated signals to signal assigner 206a.

Signal assigner 206a allocates the modulation signal output from modulator 208 to a resource. Signal assigner 206a allocates the 2nd stage SCI to the PSSCH area and the 1st stage SCI to the PSCCH area based on the PRB number of PSCCH and the size of the Subchannel of PSSCH that are outputted from configuration information receiver 210. After performing the resource allocation, signal assigner 206a outputs the transmission signal to transmitter 209.

In Embodiment 2 described above, the size of a Subchannel is set to the size of an SL BWP or the size of LBT BW in a case where a data signal and/or a control signal (for example, PSSCH/PSCCH) is transmitted. According to this configuration, even when a data signal in Subchannel units is transmitted, it is possible to satisfy the OCB regulation, thereby enabling appropriate resource allocation in the frequency direction.

### (Embodiment3)

In Embodiment 3, when a terminal maps PSFCH in the unlicensed band, the mapping satisfies the OCB regulation. Note that PSFCH is an example of a feedback signal.

Note that the configuration of the terminal according to Embodiment 3 may be the same as the configuration of terminal 200a illustrated in FIG. 13 or may be the same as the configuration of terminal 200 illustrated in FIG. 8. Alternatively, the configuration of the terminal according to Embodiment 3 may be the configuration in which a function for performing the operation example described below is added to the configuration of terminal 200a illustrated in FIG. 13 or terminal 200 illustrated in FIG. 8.

### [Operation Example 3-1]

In Operation Example 3-1, the terminal transmits the PSFCH allocated to an interlace.

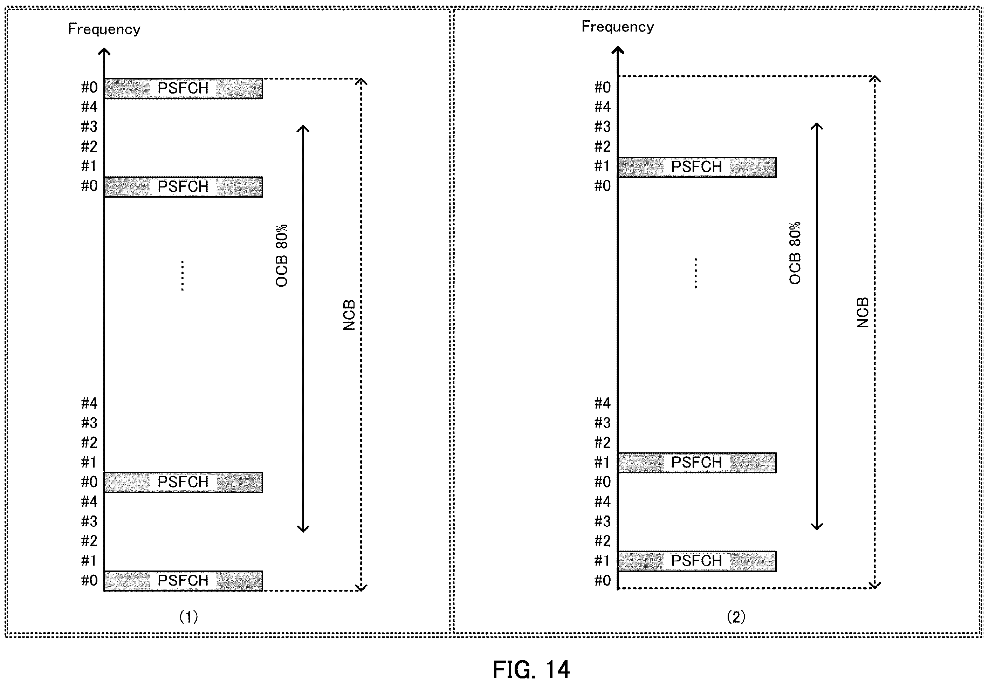

FIG. 14 illustrates an example of mapping in Operation Example 3-1 of Embodiment 3. Exemplary mapping of PSFCHs in different interlaces is illustrated in (1) and (2) of FIG. 14. Note that the vertical axes in (1) and (2) of FIG. 14 represent frequency axes.

For example, in (1) and (2) of FIG. 14, PSFCH is allocated to one interlace. In (1) of FIG. 14, PSFCH is allocated to interlace #0 and is transmitted in interlace #0. In (2) of FIG. 14, PSFCH is allocated to interlace #1 and transmitted in interlace #1. Note that the interlace number to which the PSFCH is allocated may be determined based on at least one of the slot number and the Subchannel number in which the PSSCH for which the feedback signal is transmitted by PSFCH is transmitted. Further, the interlace number to which the PSFCH is allocated may be determined based on the Source ID and the Member ID. Further, PSFCH may be further multiplexed using a cyclic shift or the like.

According to Operation Example 3-1, it is possible to satisfy the OCB regulation by allocating PSFCH to an interlace and transmitting it. Further, since the PSFCH in the licensed band is transmitted with one PRB, in Operation Example 3-1, the frequency diversity effect can be obtained by transmitting with a plurality of PRBs as compared to the case where the PSFCH is transmitted with one PRB.

### [Operation Example 3-2]

In Operation Example 3-2, PSFCH is transmitted using a part of the interlace allocation.

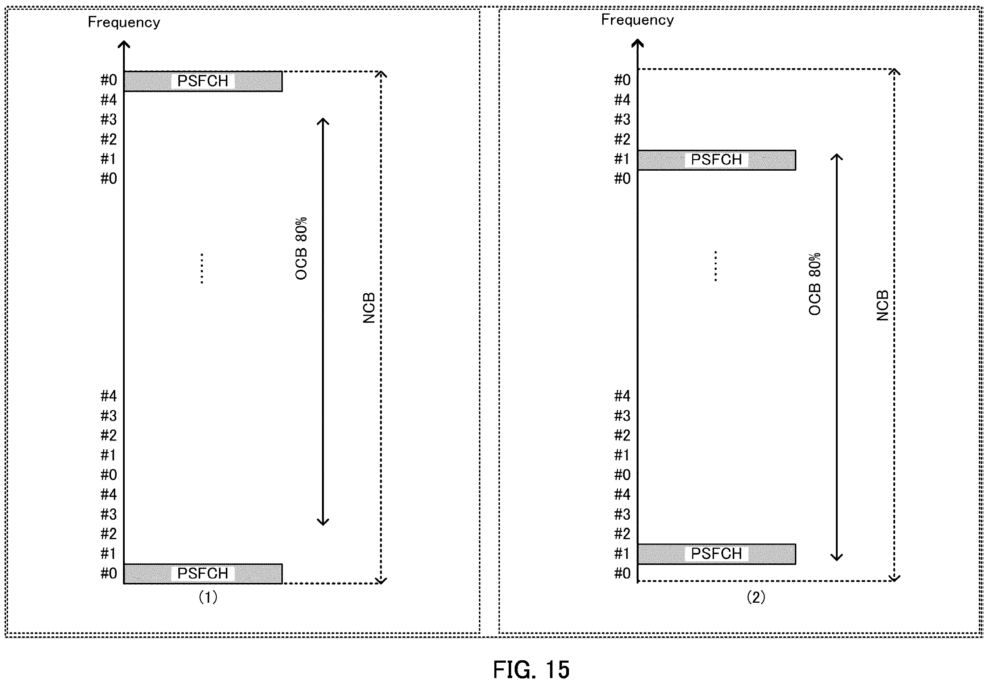

FIG. 15 illustrates an example of the allocation in Operation Example 3-2 of Embodiment 3. Exemplary mapping of different PSFCHs is illustrated in (1) and (2) of FIG. 15. Note that the vertical axes in (1) and (2) of FIG. 15 represent frequency axes.

For example, in (1) and (2) of FIG. 15, PSFCH is allocated to one interlace, but is transmitted only with PRBs at both ends of the band, and is not transmitted with PRBs on the inside of the band.

In (1) of FIG. 15, PSFCH is transmitted in interlace #0. In (2) of FIG. 15, PSFCH is transmitted in interlace #1. As in Operation Example 3-1, the interlace number in which the PSFCH is transmitted may be determined based on at least one of the slot number and the Subchannel number in which the PSSCH for which a feedback signal is transmitted by PSFCH is transmitted. Further, the interlace number in which PSFCH is transmitted may be determined based on at least one of the Source ID and the Member ID. Further, PSFCH may be further multiplexed using a cyclic shift. Note that, in a case where a guard band is configured at an edge of the band, PSFCH may be mapped at a PRB that is included in the corresponding interlace and is closest to the edge of the band among PRBs that are not included in the guard band.

In (1) and (2) of FIG. 15, PSFCH can satisfy the OCB regulation even when transmitted at both ends of the interlace allocation. Further, since the number of PRBs to be transmitted is small, it is possible to concentrate power on the two PRBs.

Note that, in the licensed band, PSFCH is transmitted in one PRB, resulting in a high multiplexing number. In the case of transmitting PSFCH as in Operation Example 3-1 or Operation Example 3-2, on the other hand, the number of PSFCHs that can be multiplexed in the frequency direction decreases as compared to PSFCHs in the licensed band. For example, as in Embodiment 2 described above, when the unit of resource allocation for PSSCH/PSCCH is increased, the number of PSFCHs to be transmitted decreases, and thus, the number of PSFCHs may be sufficient even with an interlace allocation. Therefore, it is effective to implement the operation example of Embodiment 3 in combination with the embodiment.

Note that, in the licensed band, the frequency with which PSFCH is mapped and transmitted can be selected. For example, in the licensed band, a terminal can select a method of mapping PSFCH in one slot among four slots for sidelink, a method of mapping PSFCH in two slots among four slots, a method of mapping PSFCH in all slots, or a method of not mapping PSFCH. Further, the same frequency as the licensed band may be configured in the unlicensed band, a lower frequency than the licensed band may be configured, such as mapping and transmitting in one slot among eight slots.

In Embodiment 3 described above, when transmitting the feedback signal, the resource for transmitting the feedback signal is configured in interlace mapping. According to this configuration, the frequency resources for transmitting feedback signals can be dispersed on the frequency axis, thereby satisfying the OCB regulation and allowing appropriate resource mapping in the frequency direction.

### (Variation)

Note that each operation example of each embodiment described above may be used in combination.

Note that, terminals that perform transmission and/or reception in the sidelink include a terminal that performs transmission and does not perform reception in the sidelink, a terminal that performs reception and does not perform transmission in the sidelink, and a terminal that performs both transmission and reception in the sidelink.

Note that, when a configuration relating to the sidelink is configured in advance, the configuration method may be configured in advance in specifications or may be configured in advance in a subscriber identity module (SIM). Alternatively, the configuration relating to the sidelink may be configured in an application layer called pre-configured, in a higher layer such as a system information block (SIB) called configured and/or another radio resource control (RRC), or in a medium access control (MAC).

Note that, each of the embodiments described above illustrates the case of sidelink communication, but the present disclosure is not limited thereto. For example, in each embodiment described above, the PSCCH may be replaced with the PDCCH, the PSSCH may be replaced with the PDSCH or the PUSCH, the PSFCH may be replaced with the PUCCH, and the PSBCH may be replaced with the PBCH, and the present disclosure may be applied to communication between the base station and the terminal.

Note that, each of the embodiments described above may be applied to Mode 2 and may not be applied to Mode 1, or may be applied to both Mode 1 and Mode 2, or may be applied to Mode 1 and may not be applied to Mode 2. Further, in the operation examples in the embodiments described above, an operation example to which Mode 1 is applied and an operation example to which Mode 2 is applied may be the same or different. For example, there may be an operation example that is applied to Mode2 and is not applied to Mode1.

Further, when each of the above-described embodiments is applied to Mode 1, the selection of which operation example to use from the operation examples of the above-described embodiments may be instructed by the base station. For example, the base station may provide instructions in the licensed band.

Further, in the embodiments described above, operation examples in an unlicensed band have been indicated, but the frequency band of an unlicensed band may vary from country to country or may vary for each region. The frequency band of an unlicensed band includes, illustratively, the 5 GHz band (5150 MHz - 5925 MHz), the 6 GHz band (5925 MHz - 7125 MHz), and 52.6 GHz to 71 GHz.

Note that, the usability of each of the above-described embodiments or each of the operation examples may be changed according to the SCS.

The SCI format to be transmitted in the PSCCH may be SCI format 1-A or a newly added SCI format.

The guard band may be called an intra-cell guard band.

In the unlicensed band, as in Embodiment 2, where interlace allocation is applied to PSCCH/PSSCH, PSFCH may not be supported. By defining whether to support such a feature as described above, it is possible to support the interlace allocation of PSCCH/PSSCH without supporting a new format of PSFCH.

Note that, the resource allocation for sidelink communication illustrated in each of the embodiments described above is an example, and the present disclosure is not limited thereto. For example, signals, channels, idle periods, or the like that are not illustrated may be included in resources for the sidelink communication. Further, the widths of signals in the time direction and frequency direction illustrated in the drawings are not limited to the illustrated examples. Further, the size of a slot, the size of a resource, the size of a channel, the size of a signal, and the like are not limited to the examples described above. Further, the value of the SCS, the sensing interval of the LBT, and the like are not limited to those in the examples described above.

Further, each of the embodiments described above has exemplified a case in which the duration of a sidelink signal is adjusted by increasing the CP duration of the sidelink signal by the CP extension, but the present disclosure is not limited thereto. Instead of increasing the CP duration, the duration may be adjusted by adding a known signal.

Further, in each of the embodiments described above, the confirmation of availability of the channel may be replaced with an expression such as sensing (or monitoring) of availability of the channel. Further, in this case, the term "channel" may be replaced with other terms such as "carrier" or "resource."

Further, the indication method of control information from base station 100 to terminal 200 is not limited to the example described above, and the control information may be indicated (or broadcast, instructed, configured) by at least one of system information such as MIB and SIB, RRC control information, MAC control information, and downlink control information (DCI), may be configured in advance to terminal 200, and/or may be predefined in specifications.

The base station may be referred to as a gNodeB or a gNB. Further, the terminal may be referred to as UE.

The time resource unit such as a slot may be replaced with another unit such as a system frame, a time slot, a minislot, a frame, a subframe, a block, or the like.

The notation indicating a specific location in the frequency domain, such as band, bandwidth, frequency band, frequency resource, frequency position, resource block, PRB, and the like, may be interchanged. Further, in the above description, the position of a frequency is not limited to a single position in the frequency domain. For example, the frequency position may indicate a range having a width in the frequency domain.

Further, any term ending with a suffix, such as "-er" "-or" or "-ar", in the embodiments described above may be replaced with another term, such as "circuitry," "device," "unit," or "module."

Note that the terms "interpret," "identify," "determine," "judge," "decide," "calculate," "grasp," "recognize," "confirm," or "understand" may be used interchangeably.

### (Complement)

Information indicating whether terminal 200 supports the functions, operations, or pieces of processing that have been indicated in the above-mentioned embodiments may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments. Alternatively, the capability information may include information elements that indicate whether terminal 200 supports a combination of any two or more of the functions, operations, or pieces of processing that have been described in the above-mentioned embodiments.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. For example, base station 100 may control sidelink communication between terminals 200 based on the capability information received from terminal 200.

Note that in a case where terminal 200 does not entirely support the functions, operations, or pieces of processing described in the above-mentioned embodiments, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

### (Control Signal)

In the present disclosure, the downlink control signal (or downlink control information) according to an exemplary embodiment of the present disclosure may be, for example, a signal (or information) transmitted in a physical downlink control channel (PDCCH) in a physical layer or may be a signal (or information) transmitted in a medium access control control element (MAC CE) or a radio resource control (RRC) in a higher layer. Further, the signal (or information) is not limited to that indicated by the downlink control signal, but may be predefined in specifications (or standards) or may be configured in advance to the base station and the terminal.

In the present disclosure, the uplink control signal (or uplink control information) according to an exemplary embodiment of the present disclosure may be, for example, a signal (or information) transmitted in a PUCCH in the physical layer or may be a signal (or information) transmitted in the MAC CE or RRC in the higher layer. Further, the signal (or information) is not limited to that indicated by the uplink control signal, but may be predefined in specifications (or standards) or may be configured in advance to the base station and the terminal. Further, the uplink control signal may be replaced with, for example, uplink control information (UCI), 1st stage sidelink control information (SCI) or 2nd stage SCI.

### (Base Station)

In an exemplary embodiment of the present disclosure, the base station may be, for example, a transmission reception point (TRP), a clusterhead, an access point, a remote radio head (RRH), an eNodeB (eNB), a gNodeB (gNB), a base station (BS), a base transceiver station (BTS), a base unit, a gateway, or the like. Further, in sidelink communication, the terminal may play a role of the base station. Furthermore, instead of the base station, a relay apparatus that relays communication between a higher node and a terminal may be used. Moreover, a roadside device may be used.

### (Uplink/Downlink/Sidelink)

An exemplary embodiment of the present disclosure may be applied to, for example, any of the uplink, downlink, and sidelink. An exemplary embodiment of the present disclosure may be applied to, for example, a Physical Uplink Shared Channel (PUSCH), a Physical Uplink Control Channel (PUCCH), and a Physical Random Access Channel (PRACH) in the uplink, or a Physical Downlink Shared Channel (PDSCH), a PDCCH, and a Physical Broadcast Channel (PBCH) in the downlink, or a Physical Sidelink Shared Channel (PSSCH), a Physical Sidelink Control Channel (PSCCH), and a Physical Sidelink Broadcast Channel (PSBCH) in the sidelink.

Note that, the PDCCH, the PDSCH, the PUSCH, and the PUCCH are examples of a downlink control channel, a downlink data channel, an uplink data channel, and an uplink control channel, respectively. Further, the PSCCH and the PSSCH are examples of a sidelink control channel and a sidelink data channel, respectively. Further, the PBCH and the PSBCH are examples of a broadcast channel, and the PRACH is an example of a random access channel.

### (Data Channel/Control Channel)

An exemplary embodiment of the present disclosure may be applied to, for example, any of a data channel and a control channel. For example, a channel in an exemplary embodiment of the present disclosure may be replaced with any of a PDSCH, a PUSCH, and a PSSCH for the data channel, or a PDCCH, a PUCCH, a PBCH, a PSCCH, and a PSBCH for the control channel.

### (Reference Signal)

In an exemplary embodiment of the present disclosure, the reference signals are, for example, signals known to both the base station and the mobile station and each reference signal may be referred to as a reference signal (RS) or sometimes a pilot signal. Each reference signal may be any of a Demodulation Reference Signal (DMRS), a Channel State Information-Reference Signal (CSI-RS), a Tracking Reference Signal (TRS), a Phase Tracking Reference Signal (PTRS), a Cell-Specific Reference Signal (CRS), or a Sounding Reference Signal (SRS).

### (Time Interval)

In an exemplary embodiment of the present disclosure, time resource units are not limited to one or a combination of slots and symbols, and may be time resource units, such as frames, superframes, subframes, slots, time slots, subslots, minislots, or symbols, orthogonal frequency division multiplexing (OFDM) symbols, single carrier-frequency division multiplexing (SC-FDMA) symbols, or other time resource units. The number of symbols included in one slot is not limited to any number of symbols exemplified in the embodiments described above, and may be other numbers of symbols.

### (Frequency Band)

An exemplary embodiment of the present disclosure may be applied to any of a licensed band and an unlicensed band.

### (Communication)

An exemplary embodiment of the present disclosure may be applied to any of communication between a base station and a terminal (Uu-link communication), communication between a terminal and a terminal (sidelink communication), and Vehicle to Everything (V2X) communication. For example, a channel in an exemplary embodiment of the present disclosure may be replaced with any of a PSCCH, a PSSCH, a Physical Sidelink Feedback Channel (PSFCH), a PSBCH, a PDCCH, a PUCCH, a PDSCH, a PUSCH, and a PBCH.

Further, an exemplary embodiment of the present disclosure may be applied to any of a terrestrial network or a non-terrestrial network (NTN) using a satellite or a high altitude pseudo satellite (HAPS). In addition, an exemplary embodiment of the present disclosure may be applied to a terrestrial network having a large transmission delay compared to a symbol duration or a slot duration, such as a network with a large cell size, and/or an ultra-wideband transmission network.

### (Antenna Port)

In an exemplary embodiment of the present disclosure, the antenna port refers to a logical antenna (antenna group) configured of one or a plurality of physical antennae. For example, the antenna port does not necessarily refer to one physical antenna and may refer to an array antenna or the like configured of a plurality of antennae. For example, the number of physical antennae configuring the antenna port may not be specified, and the antenna port is defined as the minimum unit with which a terminal station can transmit a reference signal. Further, the antenna port may be defined as the minimum unit for multiplication of a weight of a precoding vector.

### <5G NR System Architecture and Protocol Stack>

3GPP has been working at the next release for the 5th generation cellular technology, simply called 5G, including the development of a new radio access technology (NR) operating in frequencies ranging up to 100 GHz. The first version of the 5G standard was completed at the end of 2017, which allowed proceeding to 5G NR standard-compliant trials and commercial deployments of terminals (e.g., smartphones).

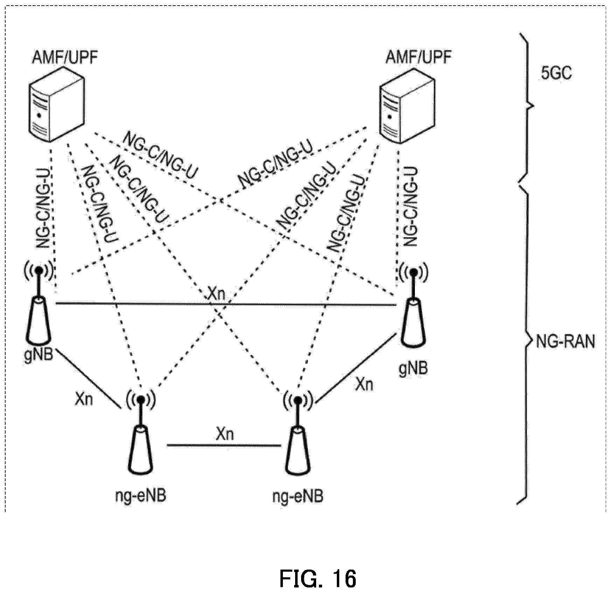

For example, the overall system architecture assumes an NG-RAN (Next Generation-Radio Access Network) that includes gNBs. The gNB provides the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 16 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC, and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates in the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the duration of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

### <Functional Split between NG-RAN and 5GC in 5G NR>

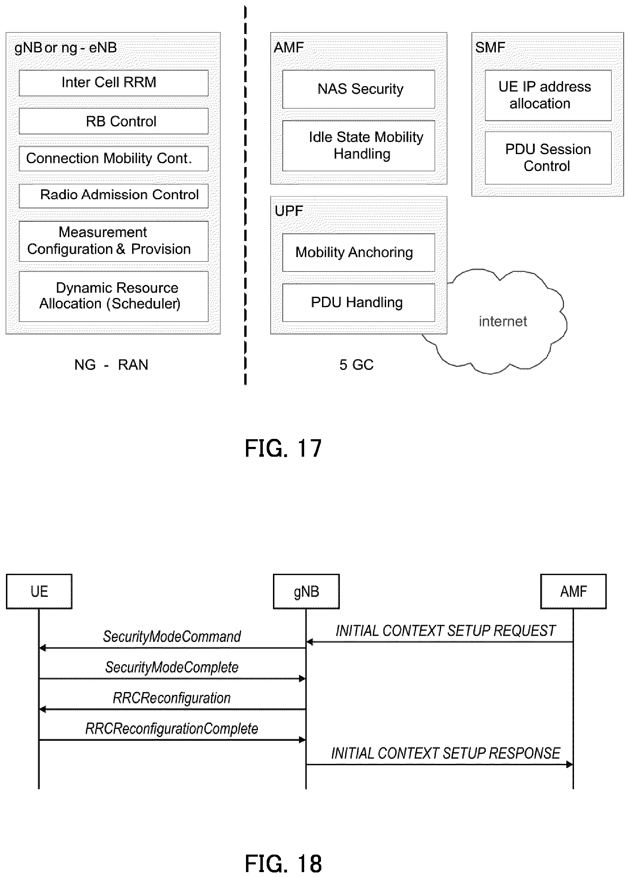

FIG. 17 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:
- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an action management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:
- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:
- Anchor Point for intra-linter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:
- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

### <RRC Connection Setup and Reconfiguration Procedure>

FIG. 18 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer (s), DRB (s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB informs the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which, in operation, transmits an initial context setup message to the gNodeB via the NG connection such that a signaling radio bearer between the gNodeB and a User Equipment (UE) is configured up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

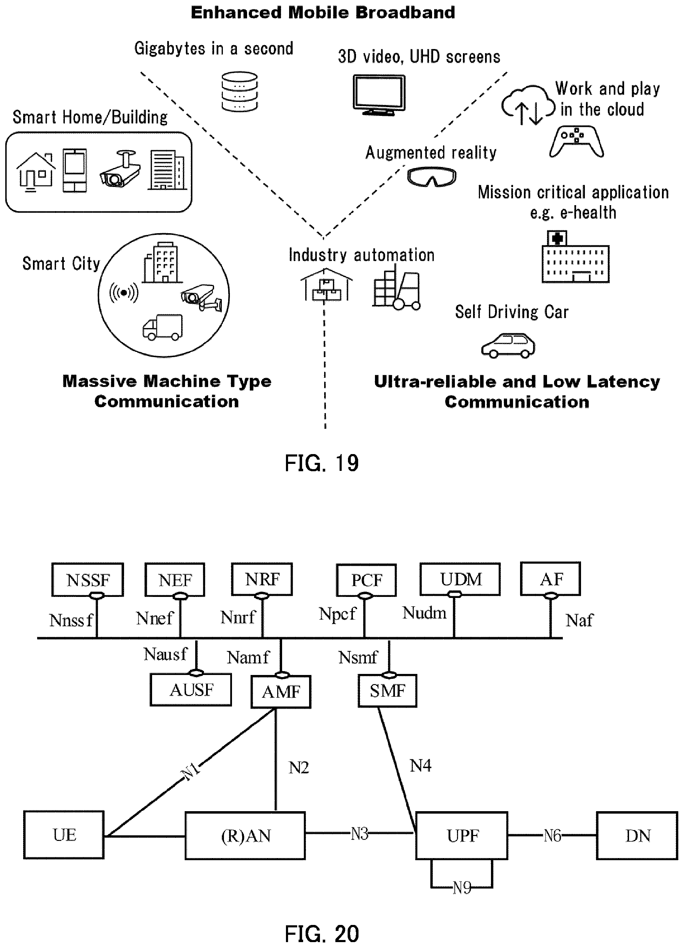

FIG. 19 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 19 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements configured by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been identified such as factory automation, transport industry and electrical power distribution. The tighter requirements are higher reliability (up to 10-6 level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearer (DRB) together with the PDU Session, e.g., as illustrated above with reference to FIG. 18. Further, additional DRB (s) for QoS flow (s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

FIG. 20 illustrates a 5G NR non-roaming reference architecture (see TS 23.501 v16.1.0, section 4.23). An Application Function (AF), e.g., an external application server hosting 5G services, exemplarily described in FIG. 19, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions

FIG. 20 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that includes: a transmitter, which, in operation, transmits a request containing a QoS requirement for at least one of URLLC, eMMB and mMTC services to at least one of functions (for example NEF, AMF, SMF, PCF,UPF, etc.) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

When future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennae. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A communication apparatus according to an embodiment of the present disclosure includes: control circuitry, which, in operation, maps a signal for sidelink communication in a frequency resource that satisfies a bandwidth limitation related to a frequency band in an unlicensed band; and transmission circuitry, which, in operation, transmits the signal.

In an embodiment of the present disclosure, the control circuitry determines a certain frequency resource such that a first frequency resource specified by a parameter specifying a resource of a synchronization signal and/or a broadcast signal of the sidelink communication and a second frequency resource different from the first frequency resource satisfy the bandwidth limitation, the certain frequency resource being the second frequency resource, and the transmission circuitry transmits the synchronization signal and/or the broadcast signal in the first frequency resource and the second frequency resource.

In an embodiment of the present disclosure, the first frequency resource is common between the sidelink communication and a link through a base station.

In an embodiment of the present disclosure, the first frequency resource is different between the sidelink communication and a link through a base station.

In an embodiment of the present disclosure, the control circuitry maps a synchronization signal and/or a broadcast signal of the sidelink communication in an interlace in a frequency band.

In an embodiment of the present disclosure, the control circuitry configures a size of a resource for transmitting a data signal and/or a control signal for the sidelink communication to a size defined for sidelink.

In an embodiment of the present disclosure, the control circuitry configures a size of a resource for transmitting a data signal and/or a control signal for the sidelink communication to a size defined for listen before talk (LBT).

In an embodiment of the present disclosure, the control circuitry map a feedback signal for the sidelink communication in an interlace in a frequency band.

In an embodiment of the present disclosure, the control circuitry determines a number of the interlace based on a slot number or a Subchannel number in which a data signal for the sidelink communication corresponding to the feedback signal for the sidelink communication is received.

In a communication method according to an embodiment of the present disclosure, a communication apparatus maps a signal for sidelink communication in a frequency resource that satisfies a bandwidth limitation related to a frequency band in an unlicensed band; and transmits the signal.

The disclosure of Japanese Patent Application No. 2022-069210, filed on April 20, 2022, including the specification, drawings and abstract, is incorporated herein by reference in its entirety.

### Industrial Applicability

An embodiment of the present disclosure is useful for radio communication systems.

### Reference Signs List

100 Base station
101, 221 Radio transceiver
102, 220, 220a Controller
200, 200a Terminal
201 Receiver
202 LBT carrier sensor
203 Demodulator
204 Error correction decoder
205 Synchronization signal configurator
206, 206a Signal assigner
207 Error correction encoder
208 Modulator
209 Transmitter
210 Control information receiver
211 Control signal generator

## Claims

1. A communication apparatus, comprising:
control circuitry, which, in operation, maps a signal for sidelink communication in a frequency resource that satisfies a bandwidth limitation related to a frequency band in an unlicensed band; and
transmission circuitry, which, in operation, transmits the signal.

2. The communication apparatus according to claim 1, wherein
the control circuitry determines a certain frequency resource such that a first frequency resource specified by a parameter specifying a resource of a synchronization signal and/or a broadcast signal of the sidelink communication and a second frequency resource different from the first frequency resource satisfy the bandwidth limitation, the certain frequency resource being the second frequency resource, and
the transmission circuitry transmits the synchronization signal and/or the broadcast signal in the first frequency resource and the second frequency resource.

3. The communication apparatus according to claim 2, wherein
the first frequency resource is common between the sidelink communication and a link through a base station.

4. The communication apparatus according to claim 2, wherein
the first frequency resource is different between the sidelink communication and a link through a base station.

5. The communication apparatus according to claim 1, wherein
the control circuitry maps a synchronization signal and/or a broadcast signal of the sidelink communication in an interlace in a frequency band.

6. The communication apparatus according to claim 1, wherein
the control circuitry configures a size of a resource for transmitting a data signal and/or a control signal for the sidelink communication to a size defined for sidelink.

7. The communication apparatus according to claim 1, wherein
the control circuitry configures a size of a resource for transmitting a data signal and/or a control signal for the sidelink communication to a size defined for listen before talk (LBT).

8. The communication apparatus according to claim 1, wherein
the control circuitry map a feedback signal for the sidelink communication in an interlace in a frequency band.

9. The communication apparatus according to claim 8, wherein
the control circuitry determines a number of the interlace based on a slot number or a Subchannel number in which a data signal for the sidelink communication corresponding to the feedback signal for the sidelink communication is received.

10. A communication method, comprising:
mapping, by a communication apparatus, a signal for sidelink communication in a frequency resource that satisfies a bandwidth limitation related to a frequency band in an unlicensed band; and
transmitting, by the communication apparatus, the signal.
